## Europäisches Patentamt

## European Patent Office

## Office européen des brevets

(11) Publication number: **0 176 134**
**B1**

(12)

# EUROPEAN PATENT SPECIFICATION

(45) Date of publication of patent specification: **16.08.89**

(51) Int. Cl.⁴: **A 01 G 9/10, A 01 G 31/02**

(21) Application number: **85201441.4**

(22) Date of filing: **11.09.85**

(54) **Plant pot for use in substrate culture.**

(30) Priority: **13.09.84 NL 8402816**

(43) Date of publication of application:
**02.04.86 Bulletin 86/14**

(45) Publication of the grant of the patent:
**16.08.89 Bulletin 89/33**

(84) Designated Contracting States:
**BE DE FR GB LU NL**

(56) References cited:
**GB-A- 737 660**
**GB-A-2 106 764**
**US-A-4 058 931**

(73) Proprietor: **van Gorkom, Johannes Cornelis Petrus Maria**
**54 Grote Spie**
**NL-4819 CX Breda (NL)**
(84) **BE LU NL**

(73) Proprietor: **de Ruijter, Johannes Henricus Franciscus**
**Brigidastraat 3**
**NL-4854 CR Bavel (NL)**
(84) **BE LU NL**

(73) Proprietor: **Rockwool/ Grodan B.V.**
**Industrieweg 15**
**NL-6074 NH Melick-Herkenbosch (NL)**
(84) **BE DE FR GB LU NL**

(73) Proprietor: **Rockwool Lapinus B.V.**
**Industrieweg 15**
**NL-6074 NH Melick-Herkenbosch (NL)**
(84) **BE DE FR GB LU NL**

(73) Proprietor: **Grodania A/S**
**Hovedgaden 501**
**DK-2640 Hedehusene (DK)**
(84) **BE DE FR GB LU NL**

Courier Press, Leamington Spa, England.

## EP 0 176 134 B1

(72) Inventor: **van Gorkom, Johannes Cornelis**
**Petrus Maria**
**54 Grote Spie**
**NL-4819 CX Breda (NL)**
Inventor: **de Ruijter, Johannes Henricus**
**Franciscus**
**Brigidastraat 3**
**NL-4854 CR Bavel (NL)**
Inventor: **Rockwool/ Grodan B.V.**
**Industrieweg 15**
**NL-6074 NH Melick-Herkenbosch (NL)**
Inventor: **Rockwool Lapinus B.V.**
**Industrieweg 15**
**NL-6074 NH Melick-Herkenbosch (NL)**
Inventor: **Grodania A/S**
**Hovedgaden 501**
**DK-2640 Hedehusene (DK)**

(74) Representative: **Hoorweg, Petrus Nicolaas et al**
**OCTROOIBUREAU ARNOLD & SIEDSMA**
**Sophiastraat 42 P.O. Box 7293**
**NL-4800 GG Breda (NL)**

**Description**

The invention relates to a plant pot for cultivating a seedling, for use in a substrate culture, in which culture the plant pot is to be placed on a substrate of mineral wool, having the form of a parallelepiped made of mineral wool, the upper surface of the plant pot being provided with an opening of a definite depth for receiving a seedling grown in a growing medium, the four side surfaces adjoining the upper surface are covered with a layer of water and light impermeable material.

Such a plant pot is disclosed in the article "Culture sur laine de roche aux Pays-Bas" by M. Verdure in "Revue Horticole" No. 213, January 1981, page 14—26.

This kind of plant pot, having a flat bottom surface, is used, as a rule, for further development of a plant after germination, after which the plant pot with the developed plant is placed in its entirety on a substrate such as mineral wool for further cultivation by means of hydroculture. In the intervening phase it is usual to place the plant pot loose on a stone ground, which has brought with it the disadvantage that the root development was not optimal. In order to counter that disadvantage, plant pots of this kind are placed on Perlite grains which are spread on the ground beforehand. However, the use of Perlite grains has preponderant disadvantages, namely from the point of view of dust formation, while the relatively sharp grains can damage the hands and knees of the nursery workers, thus demanding protective measures.

The invention aims to provide a plant pot in which an optimal root development of the seedling can take place without the use of above mentioned Perlite grains or the like.

The plant pot according to the invention is characterized in that the bottom surface of the parallelepiped is provided with at least one grooves which opens in at least one side surface to ensure an adequate supply of air, the groove depth corresponds to a minor part of the height of the parallelepiped.

It is noted that the US—A—4,058,931 discloses a cultivation block of foam material for the germination of seed. This block is provided with an indentation apt to accommodate the seed and is connected with underlying channels via a bore. A nutrient containing liquid is passed unhindered through these channels so that the roots penetrating the block via the bore find ample space to spread in the nutrient fluid. Accordingly, a root system of so-called water roots is formed under and beside the cultivation block so that growth retardation is avoided when the block carrying the seedling is bedded out in ordinary soil. Because the cultivation block channels are filled with nutrient liquid, air pruning does not occur in the channel so that branched roots carrying hair roots are not formed, which type of roots form the starting point for the roots which will grow into the substrate on which the plant pot is placed.

According to the invention, various different embodiments of the plant pot are possible. For instance, if two or more grooves are used, these grooves may run parallel and/or cross one another. Alternatively, it is possible that the bottom surface is wavy.

The invention will now be further explained with reference to the description with figures, below, of a number of embodiment examples.

In the drawings:

Fig. 1a, b, c, d and e show five different possible embodiments of the plant pot according to the invention, seen from the underside of the pot.

Fig. 2 shows a perspective view from above of plant pots situated next to one another on a flat ground.

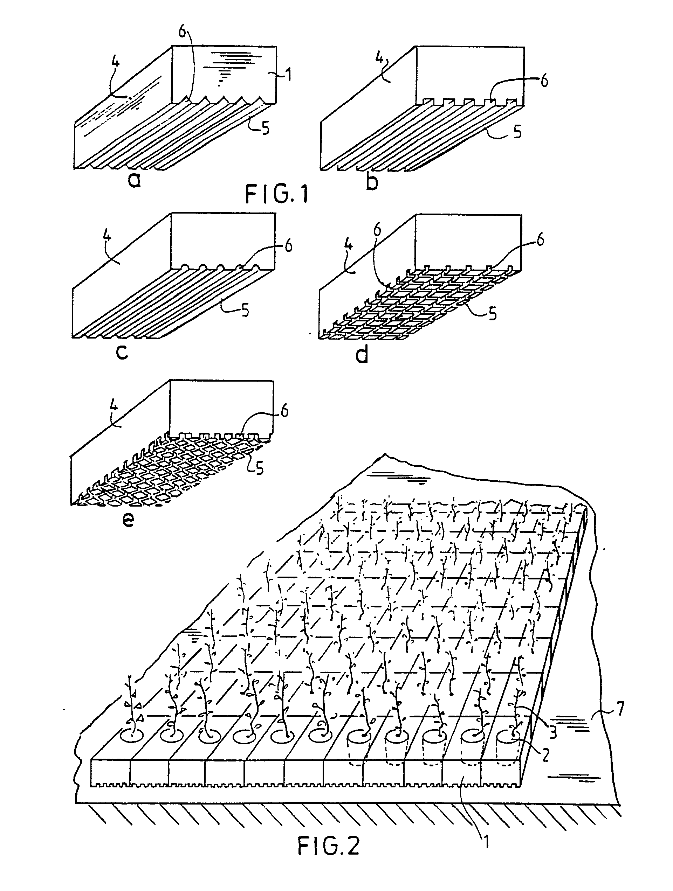

The plant pot 1, in figure 1, has the form of a parallelepiped and can have a rectangular or quadrangular shape, seen from above. The upper surface, see figure 2, is drilled into in such a way there is a centrale opening 2, which has a definite depth and which serves for the accommodation of a seedling 3. The side surfaces adjoining the upper surface are covered with a layer 4, of waterproof material, which layer can consist of a foil of plastic material which is wound as a strip around the four side surfaces.

According to the invention, the bottom side is made with grooves 6. These can be made with help of a milling cutter or suchlike, in such a way that grooves 6 result. By situating five milling cutters next to one another, when the plant pot 1 is displaced over the cutters five longitudinal grooves 6 are cut simultaneously. The cross sections of these grooves 6 can be triangular, see figure 1a, rectangular, see figure 1b, half round, see figure 1c, or arbitrarily any other shape.

Figure 1d shows that the grooves 6 can be cut in two directions resulting in a grid pattern. The grooves can hereby run parallel to the side surfaces or, alternatively, at an angle to them, in order to increase the size of the air supply openings in the sides—see figure 1e.

It will be clearly apparent that by placing the pots 1 on a flat ground 7, the channels 6 on the underside of the pots ensure an adequate supply of air to the underside, so that root rot is prevented and a healthy development of the root system is permitted.

**Claims**

1. Plant pot (1) for cultivating a seedling (3) for use in a substrate culture, in which culture the plant pot (1) is to placed on a substrate of mineral wool, having the form of a parallelepiped (1) made of mineral wool, the upper surface of the plant pot being provided with an opening (2) of a definite depth for receiving the seedling (3), the four side surfaces adjoining the uqper surface are covered with a layer (4) of water and light impermeable material, characterized in that the bottom surface (5) of the parallelepiped (1) is provided with at least one groove (6) which opens in at least one side surface to ensure an adequate supply of air, the groove depth corresponds to a minor part of the height of the parallelepiped (1).

2. Plant pot (1) as claimed in claim 1, wherein the bottom surface (5) is provided with at least two grooves (6) which run parallel to one another.

3. Plant pot (1) as claimed in claim 1 or 2, wherein the bottom surface (5) is provided with at least two grooves (6) which cross one another.

4. Plant pot (1) as claimed in claim 1—3, wherein the bottom surface (5) is wavy.

5. Method for manufacturing a plant pot (1) according to claim 1—4, wherein the plant pot (1) is cut as a parallelepiped (1) from a sheet of mineral wool and an opening (2) of a defined depth is drilled in the upper surface, characterized in that the plant pot (1) is moved with its bottom surface (5) along a milling apparatus in order to form in the bottom surface (5) at least one groove (6) which opens in at least one of the four side surfaces (4).

**Patentansprüche**

1. Pflanzengefäß (1) zur Kultivierung von Saatgut (3) unter Verwendung einer Substratkultur, in welcher das Pflanzengefäß (1) auf einem Substrat aus Mineralwolle angeordnet ist, welches die Form eines Parallelepipeds (1) hat, das aus Mineralwolle hergestellt ist, wobei die obere Oberfläche des Pflanzengefäßes mit einer Öffnung (2) von definierter Tiefe zur Aufnahme des Saatgutes (3) versehen ist, und wobei die vier Seitenflächen, die an die obere Oberfläche angrenzen, mit einer Schicht (4) aus einem wasser- und lichtundurchlässigen Material beschichtet sind, dadurch gekennzeichnet, daß die Bodenfläche (5) des Parallepipeds mit mindestens einer Nut (6) versehen ist, welche sich zu wenigstens einer Seitenoberfläche hin öffnet, um eine adäquate Zufuhr von Luft sicherzustellen, wobei die Tiefe der Nut zu einem kleineren Teil zu der Höhe des Parallelepipeds (1) korrespondiert.

2. Pflanzengefäßt (1) gemäß Anspruch 1, bei welchem die Bodenfläche (5) des Bodens mit wenigstens zwei Nuten (6), die parallel zueinander verlaufen, versehen ist.

3. Pflanzengefäß (1) gemäß Anspruch 1 oder 2, bei welchem die Oberfläche (5) des Bodens mit wenigstens zwei Nuten (6), die einander kreuzen, versehen ist.

4. Pflanzengefäß (1) gemäß den Ansprüchen 1 bis 3, bei welchem die Bodenfläche (5) gewellt ist.

5. Verfahren zur Herstellung eines Pflanzengefäßes (1) gemäß den Ansprüchen 1 bis 4, bei welchem das Pflanzengefäß (1) aus einer Platter aus Mineralwolle in der Form eines Parallelepipeds herausgeschnitten wird und eine Öffnung von definierter Tiefe in die obere Oberfläche eingearbeitet wird, dadurch gekennzeichnet, daß da Pflanzengefäß (1) mit seiner Bodenoberfläche (5) entlang eines Fräsapparates bewegt wird, um in der Bodenoberfläche (5) wenigstens eine Nut (6) auszubilden, die such zu wenigstens einer der vier Seitenflächen (4) hinf öffnet.

**Revendications**

1. Pot (1) pour plante destiné à la culture d'un plant (3) dans une culture sur substrat dans laquelle le pot (1) pour plant est destiné à être placé sur un substrat de laine minérale, ayant la forme d'un parallélépipéde (1) formé de laine minérale, la surface supérieure du pot pour plante ayant une ouverture (2) de profondeur déterminée destinée à loger le plant (3), les quatre surfaces latérales adjacentes à la surface supérieure étant couvertes d'une couche (4) d'un matériau imperméable à l'eau et à la lumière, caractérisé en ce que la surface inférieure (5) du parallélépipéde (1) a au moins une gorge (6) qui débouche dans une surface latérale au moins afin qu'une alimentation convenable en air soit assurée, la profondeur de la gorge correspondant à une petite partie de la hauteur du parallèlépipède (1).

2. Pot (1) pour plante selon la revendication 1, dans lequel la surface inférieur (5) a au moins deux gorges (6) qui sont disposées parallèlement l'une à l'autre.

3. Pot (1) pour plante selon la revendication 1 ou 2, dans lequel la surface inférieure (5) a au moins deux gorges (6) qui se recoupent.

4. Pot (1) pour plante selon l'une des revendications 1 à 3, dans lequel la surface inférieure (5) est ondulée.

5. Procédé de fabrication d'un pot (1) pour plante selon l'une des revendications 1 à 4, dans lequel le pot (1) pour plante est découpé sous forme d'un parallélépipéde (1) dans une feuille de laine minérale et une ouverture (2) de profondeur déterminée est percée à sa surface supérieure, caractérsié en ce que le pot (1) pour plante est déplacé avec sa surface inférieure (5) le long d'un appareil de fraisage de manière qu'au moins une gorge (6) débouchant dans l'une au moins des quatre surfaces latérales (4) soit formée à la surface inférieure (5).

FIG.1

FIG.2